# NEUE EUROPÄISCHE PATENTSCHRIFT

(11) **EP 2 546 711 B2**
(45) Veröffentlichungstag und Bekanntmachung des Hinweises auf die Entscheidung über den Einspruch: **26.10.2022**
(45) Hinweis auf die Patenterteilung: 16.05.2018
(21) Anmeldenummer: 12175828.8
(22) Anmeldetag: 11.07.2012
(51) Int. Cl.: G05B 19/409, B25J 9/16

(54) **Verfahren zum Programmieren eines Roboters**
Method for programming a robot
Procédé de programmation d'un robot

(30) Priorität: 14.07.2011 DE 102011079117
(43) Veröffentlichungstag der Anmeldung: 16.01.2013
(73) Patentinhaber: KUKA Deutschland GmbH, 86165 Augsburg (DE)
(72) Erfinder: Zimmermann, Uwe, 86152 Augsburg (DE); Kurth, Johannes, 86163 Augsburg (DE)
(74) Vertreter: Böss, Dieter Alexander

(56) Entgegenhaltungen:
- EP-A2- 0 771 621
- DE-A1-102004 021 468
- Günter Schreiber: "Steuerung für redundante Robotersysteme: Benutzer- und aufgabenorientierte Verwendung der Redundanz", DLR Institut für Robotik und Mechatronik Stuttgart, 5. Oktober 2004 (2004-10-05), Seiten FP-vi, 95-102, XP002761391, Gefunden im Internet: URL:http://elib.uni-stuttgart.de/bitstream /11682/6579/1/schreiberDiss.pdf [gefunden am 2016-09-02]
- Hulin et al.: "Evaluating exemplary training accelerators for Programming-by-Demonstration", Int. Sym. In Robot and Human Interactive Communication, September 2010 (2010-09),
- Schmirgel et al.: "Comprehension of Operating a Robot by Enactive Learning: Exemplary Approaches with Programming-by-Demonstration", , 2009, Retrieved from the Internet: URL:https://www.researchgate.net/publicati on/225004754_Comprehension_of_Operating_a_ Robot_by_Enactive_Learning_Exemplary_Appro aches_with_Programming-by-Demonstration

## Beschreibung

Die Erfindung betrifft Verfahren zum Programmieren eines Roboters.

Roboter im Allgemeinen sind Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind. Roboter weisen üblicherweise einen Roboterarm mit mehreren Gliedern und programmierbare Steuerungen (Steuervorrichtungen) auf, die während des Betriebs die Bewegungsabläufe des Roboterarms steuern bzw. regeln. Die Antriebe sind z.B. elektrische Antriebe.

Aus der DE 10 2004 021 468 A1 ist ein Verfahren zum Steuern einer Maschine, insbesondere eines Roboters, wie eines Mehrachs-Industrie-Roboters, bekannt, bei dem die Steuerung unter Berücksichtigung bearbeitungsprozess-eigener Freiheitsgrade zur Vermeidung kinematischer Zwangslagen erfolgt. Im Rahmen dieser bearbeitungsprozess-eigenen Freiheitsgrade können die Achsen des Industrieroboters optimal gestellt und verfahren werden, um so problematischen Achsstellungen und singulären Stellungen möglichst fern zu bleiben. Die Regelung versucht dazu Zwischenstellungen so gut es geht anzufahren. Dabei wird für jeden einzelnen Punkt der Bahn mittels einer Gesamtgütefunktion eine optimale Stellung innerhalb eines Redundanzraums ermittelt und diese optimale Stellung anstelle der ursprünglichen Funktion angestrebt auszuführen. Beim manuellen Teachen von Positionen mittels Handbediengerät soll dieser Optimierer ständig mitlaufen, so dass abgespeicherte Zielpositionen eines Bearbeitungsvorgangs bereits optimiert sind. So sind folglich keine Ausgleichsbewegungen mehr notwendig, da schon während des Teach-Ins ständig parallel optimiert wird.

Die EP 0 771 621 A2 beschreibt ein Steuerungsverfahren zur Bestimmung einer Ellbogenstellung an einem redundanten Roboterarm. In diesem Verfahren wird mittels einer Optimierungsfunktion automatisch die optimale Zielstellung für das Ellbogengelenk berechnet und der redundante Roboterarm entsprechend automatisch angesteuert, um die automatisch berechnete optimale Zielstellung des Ellbogengelenks einzustellen.

In der Dissertation von GÜNTER SCHREIBER: "Steuerung für redundante Robotersysteme: Benutzer- und aufgabenorientierte Verwendung der Redundanz" wird u.a. eine visuelle Rückkopplung beschrieben, bei der vorgeschlagen wird, dass ein Nutzer über einen internen Fortschritt und Zustand von Algorithmen informiert wird. Dies erfolgt in diesem Dokument durch eine überlagerte Zustandsdarstellung in einer 3D-Visualisierung.

Die Aufgabe der Erfindung ist es, ein verbessertes Verfahren zum Programmieren eines Roboters anzugeben.

Die Aufgabe der Erfindung wird gelöst durch ein Verfahren zum Programmieren eines Roboters gemäß den Merkmalen des Patentanspruchs 1.

In manchen Roboteranwendungen gibt es Aufgaben, die aufgrund der eingesetzten Kinematik, d.h. aufgrund des verwendeten Roboters bzw. dessen Roboterarms und einer dadurch gegebenenfalls bestehenden Redundanz auf mehrere Arten, d.h. Roboterposen gelöst werden können. Redundanzen können u.a. in Aufgabenredundanz und Kinematikredundanz eingeteilt werden.

Unter Aufgabenredundanz wird verstanden, dass z.B. die kartesische Aufgabe für eine bestimmte Pose der Befestigungsvorrichtung und/oder des Tool Center Points mit weniger als sechs Freiheitsgraden gegeben ist und ein Roboterarm mit wenigstens 6 Achsen, insbesondere mit genau 6 Achsen verwendet wird. Ein Beispiel hierfür sind Aufgaben mit rotationssymmetrischen Werkzeugen bzw. Endeffektoren, z.B. für ein Kleben, Schweißen, Bohren, etc., bei denen die Orientierung um die Werkzeugachse (z-Achse) nicht durch den Prozess vorgegeben ist. Aber auch Aufgaben, bei denen der Prozess Toleranzen bezüglich der Werkzeugorientierung bzw. der Orientierung des Endeffektors zulässt (z.B. unterschiedliche Anstellwinkel beim Schweißen), zählen zur Aufgabenredundanz. Um eine Eindeutigkeit für die zu programmierende Pose zu erzielen, sollte die den Roboter programmierende Person diese variable Größe explizit vorgeben, so dass gegebenenfalls eine eindeutige 6 dimensionale kartesische Stellung des Roboterarms entsteht, die dann wieder "eindeutig" auf eine Pose zurückgeführt werden kann.

Unter Kinematikredundanz wird die Nutzung einer Kinematik bzw. eines Roboterarms mit mehr als 6 Freiheitsgraden verstanden, sodass eine kartesisch vorgegebene Aufgabe mit mehreren Achsstellungen gelöst werden kann. Beispiele von solchen Roboterarmen sind 7-Achsroboter insbesondere mit einem Redundanzparameter "Ellbogenwinkel", 6-Achsroboter auf einer Lineareinheit mit Redundanzparameter "Fußpunktposition auf Lineareinheit", 6-Achs-Laseroboter mit optischer Zoomeinheit mit Redundanzparameter "Fokuslänge", Roboter mit einer mobilen Plattform, auf der der Roboterarm befestigt ist, mit den Redundanzparamtern xBase, y Base, zBase.

Allgemein ist es also möglich, dass für die zu programmierende Pose mehrere Achsstellungen des Roboterarms möglich sind. Erfindungsgemäß wird nun, nachdem die den Roboter programmierende Person den Roboterarm derart manuell bewegt hat, sodass dieser die Pose einnimmt, die aktuelle Stellung der Achsen (Achsstellung) bewertet und die Bewertung auf einer Anzeigevorrichtung dargestellt. Somit erhält die Person einen Anhaltspunkt darüber, ob die aktuelle Stellung der Achsen "günstig" ist oder ob sie gegebenenfalls die Stellung des Roboterarms bei beibehaltener Pose ändern soll, um für diese Pose eine bessere oder der aktuellen Aufgabenstellung günstigere Stellung der Achsen zu erhalten. Anschließend kann die gefundene bzw. die gewollte Achsstellung gespeichert werden, um die Programmierung des Roboters zu erhalten, d.h. um das Anwenderprogramm zu erhalten, aufgrund dessen der Roboterarm im Automatikbetrieb automatisch von der Steuervorrichtung gesteuert wird.

Gemäß dem erfindungsgemäßen Verfahren wird der Roboterarm manuell bewegt. Dies kann gemäß einer Variante des erfindungsgemäßen Verfahrens durch ein manuelles Führen des Roboterarms erreicht werden, d.h. dass die den Roboter programmierende Person den Roboterarm z.B. durch Ziehen und/oder Drücken an der Struktur des Roboterarms manuell bewegt. Auch ist es möglich, dass für das manuelle Führen eine entsprechende Vorrichtung z.B. in Form eines Griffs an der Befestigungsvorrichtung befestigt ist, mittels derer der Roboterarm manuell geführt werden kann.

Das manuelle Bewegen kann nach einer weiteren Variante des erfindungsgemäßen Verfahrens mittels eines mit der Steuervorrichtung verbundenen Handbediengerätes realisiert werden. Handbediengeräte als solche sind dem Fachmann im Prinzip bekannt.

Anstelle des manuellen Bewegens des Roboterarms ist es nach einer Ausführungsform des erfindungsgemäßen Verfahrens auch möglich, die Stellung der Achsen des Roboterarms mittels einer Rechenvorrichtung derart zu simulieren, sodass die Befestigungsvorrichtung und/oder der Tool Center Point eine simulierte vorgegebene Pose einnimmt. Dann wird gemäß dieser Variante die simulierte aktuelle Stellung der Achsen des Roboterarms für die simulierte aktuelle Pose aufgrund des wenigstens einen Kriteriums bewertet und die Bewertung der simulierten aktuellen Stellung der Achsen mittels einer Anzeigevorrichtung angezeigt. Daher wird es der den Roboter programmierenden Person ermöglich, eine geeignete Achsstellung für die gewünschte Pose, unterstützt durch die angezeigte Bewertung der simulierten Achsstellung, zu finden. Die gewünschte Achsstellung kann dann gespeichert werden, um das Anwenderprogramm, aufgrund dessen der Roboter automatisch sich bewegen soll, zu erhalten.

Somit wird gemäß dieser Variante im Wesentlichen folgendes Verfahren bereit gestellt: Verfahren zum Programmieren eines Roboters, der einen mehrere, nacheinander folgende Glieder, eine Befestigungsvorrichtung zum Befestigen eines Endeffektors und Antriebe zum Bewegen der Glieder aufweisenden Roboterarm und eine mit den Antrieben verbundene Steuervorrichtung aufweist, aufweisend folgende Verfahrensschritte:
- mittels einer Rechenvorrichtung, Simulieren einer Stellung der Achsen des Roboterarms, sodass die Befestigungsvorrichtung und/oder ein dem Roboterarm zugeordneter Tool Center Point eine simulierte vorgegebene Pose einnimmt, wobei für diese Pose mehrere Stellungen der Achsen des Roboterarms möglich sind,
- automatisches Bewerten der simulierten aktuellen Stellung der Achsen des Roboterarms für die simulierte aktuelle Pose aufgrund wenigstens eines vorgegebenen und/oder vorgebbaren Kriteriums insbesondere mittels der Rechenvorrichtung, und
- Anzeigen der Bewertung der simulierten aktuellen Stellung der Achsen mittels einer Anzeigevorrichtung.

Gemäß einer weiteren Variante des erfindungsgemäßen Verfahrens weist dieses die folgenden zusätzlichen Verfahrensschritte auf:
- manuelles Verändern der Stellung der Achsen bei gleichzeitigem Beibehalten der Pose der Befestigungsvorrichtung und/oder des Tool Center Points,
- automatisches Bewerten der veränderten Stellung der Achsen des Roboterarms für die aktuelle Pose aufgrund des wenigstens einen Kriteriums insbesondere mittels der Steuervorrichtung und/oder der Rechenvorrichtung, und
- Anzeigen des Ergebnisses des Bewertens der aktuellen veränderten Stellung der Achsen mittels der Anzeigevorrichtung.

Somit wird gemäß dieser Ausführungsform der den Roboter programmierenden Person während der Veränderung der Achsstellung eine aktualisierte Bewertung angezeigt, welche die Person bei der Entscheidung über die gewünschte Achsstellung, die dann gegebenenfalls programmiert wird, unterstützt. Wird die Stellung der Achsen simuliert, dann kann die Stellung der Achsen in der Simulation bei gleichbleibender Pose der Pose der Befestigungsvorrichtung und/oder des Tool Center Points verändert werden, die simulierte veränderte Stellung der Achsen des Roboterarms für die aktuelle Pose aufgrund des wenigstens einen Kriteriums bewertet werden, und das Ergebnis des Bewertens der aktuellen simulierten veränderten Stellung der Achsen mittels der Anzeigevorrichtung angezeigt werden.

Das wenigstens eine Kriterium ist wenigstens eines der Folgenden:
- Abstände der Achsen von den jeweiligen Endanschlägen der entsprechenden Glieder des Roboterarms,
- wirkende Drehmomente auf die einzelnen Glieder des Roboterarms,
- maximale Kraft, die der Roboterarm in der aktuellen Stellung der Achsen aufbringen kann, und/oder
- Energieeffizienz insbesondere der Antriebe in der aktuellen Stellung der Achsen.

Wird z.B. die aktuelle Achsstellung aufgrund der Abstände der Achsen bewertet, dann wird beispielsweise die aktuelle Achsstellung umso besser bewertet, je weiter die Glieder von ihren Endanschlägen entfernt sind.

Die Drehmomente können z.B. mittels Achsmomentensensoren des Roboterarms bestimmt oder auch simuliert werden. Die Bewertung ist besser, je geringer die auf den Roboterarm bzw. dessen Glieder wirkenden Drehmomente sind.

Die Energieeffizienz ist z.B. den Antrieben zugeordnet, welche entsprechend der Achsstellung unterschiedlich viel Energie verbrauchen.

Die Bewertung kann z.B. als ein Zahlenwert oder auch als ein normierter Zahlenwert von "0" bis "1" angezeigt werden. Nach einer Variante des erfindungsgemäßen Verfahrens wird jedoch das Anzeigen des Bewertens der aktuellen Stellung der Achsen mittels eines grafischen Balkens angezeigt. Die Länge des Balkens ist dann beispielsweise ein Maß dafür, wie günstig die aktuelle Achsstellung ist.

Nach einer weiteren Ausführungsform des erfindungsgemäßen Verfahrens weist dieses ein automatisches Bewerten der aktuellen Stellung bzw. der aktuell simulierten Stellung der Achsen des Roboterarms für die aktuelle Pose aufgrund mehrerer vorgegebener und/oder vorgebbarer Kriterien insbesondere mittels der Steuervorrichtung und/oder der Rechenvorrichtung. Dann ist es z.B. möglich, die individuellen Bewertungen der aktuellen Stellung bzw. der aktuell simulierten Stellung der Achsen mittels der Anzeigevorrichtung für jedes der Kriterien anzuzeigen. Es ist aber alternativ oder zusätzlich möglich die Bewertung für die Gesamtheit aller Kriterien anzuzeigen. Hierbei können die einzelnen Kriterien auch unterschiedlich stark gewichtet werden.

Weist der Roboter eine mobile Plattform auf, an der der Roboterarm befestigt ist, dann kann gemäß einer Variante des erfindungsgemäßen Verfahrens diese ein Bewegen der mobilen Plattform an eine Position aufweisen, bevor der Roboterarm derart manuell bewegt wird, sodass die Befestigungsvorrichtung und/oder der Tool Center Point die vorgegebene Pose einnimmt. Die mobile Plattform weist z.B. einen Fahrzeugkörper auf, an dem der Roboterarm befestigt ist, und mehrere, an dem Fahrzeugkörper angeordnete Räder. Am oder im Fahrzeugkörper kann die Steuervorrichtung angeordnet sein. Die Räder oder zumindest eines der Räder können bzw. kann von Antrieben bzw. einem Antrieb angetrieben werden, die bzw. der von der Steuervorrichtung angesteuert werden kann. Dann ist es möglich, dass sich der als mobile Roboter ausgebildete Roboter im Automatikbetrieb automatisch gesteuert von der Steuervorrichtung bewegt. Der wenigstens einen Antrieb kann insbesondere als ein elektrischer Antrieb ausgeführt sein. Auch kann die Bewegung der mobilen Plattform simuliert werden.

Wird ein als mobiler Roboter ausgebildeter Roboter verwendet, dann kann gemäß einer Ausführungsform des erfindungsgemäßen Verfahrens dieses folgende Verfahrensschritte aufweisen:
- Verändern der Position und/oder Lage der mobilen Plattform bei gleichzeitigem Beibehalten der Pose der Befestigungsvorrichtung und/oder des Tool Center Points,
- automatisches Bewerten der veränderten Stellung der Achsen des Roboterarms für die aktuelle Pose aufgrund des wenigstens einen Kriteriums insbesondere mittels der Steuervorrichtung und/oder der Rechenvorrichtung, und
- Anzeigen der Bewertung der aktuellen Stellung der Achsen mittels der Anzeigevorrichtung.

Dies kann auch mittels des Simulierens durchgeführt werden. Somit ist es möglich, nachdem die gewollte Pose eingestellt ist, nicht nur die Stellungen der Achsen zu verändern, sei es durch manuelles Bewegen oder in der Simulation, sondern auch die Position bzw. Lage der mobilen Plattform ohne dass sich die Pose der Befestigungsvorrichtung bzw. des Tool Center Points ändert. Damit die Pose beim Verändern der Position oder Lage der mobilen Plattform unverändert bleibt, kann die Steuervorrichtung derart eingerichtet sein, dass sie automatisch den Roboterarm entsprechend bewegt. Hat die den Roboter programmierende Person eine Position oder Lage der mobilen Plattform für die gewünschte Pose gefunden, die sie als günstig erachtet, dann können die entsprechenden Stellungen der Achsen und die entsprechende Position bzw. Lage der mobilen Plattform für das Anwenderprogramm gespeichert werden.

Je nach Ausführungsform des erfindungsgemäßen Verfahrens wird demnach die eingestellte Pose aufgrund eines oder unterschiedlicher Kriterien bewertet. Beispiele für eine solche Bewertung sind z.B. Abstand der Achsen von den jeweiligen Achsendanschlägen und "Abstand" von Singularitäten der Jaccobi-Matrix, entsprechend der Manipulierbarkeit des Roboterarms.

In einem entsprechenden Bewertungsmodul, das z.B. in der Steuervorrichtung oder der anderen Rechenvorrichtung hinterlegt ist, kann nun aus der aktuellen Achsstellung des realen oder simulierten Roboters die Bewertung gemäß des wenigstens einen vorgegebenen oder vorgebbaren Kriteriums erfolgen. Ausgabe dieses Bewertungsmoduls ist insbesondere ein Maß für die Güte der aktuellen Achsstellung. Diese Bewertungsgüte kann ein absolutes Maß sein (z.B. 6 Werte für den Abstand der Achsen zum Endanschlag in Winkelgrad bzw. Summe, Mittelwert, Minimalwert der Winkel) oder vorzugsweise ein genormter Wert zwischen "0" und "1", der die Güte quantitativ angibt (Beispielsweise "0" = sehr schlecht bis "1" = sehr gut) .

Diese Bewertung bzw. Bewertungsgüte wird der den Roboter programmierenden Person angezeigt, beispielsweise als Zahlenwert oder vorzugsweise graphisch z.B. als Balken oder auf andere intuitive Art und Weise. Die Anzeige kann sowohl in einer Simulationsumgebung als auch auf dem Programmierhandgerät bzw. Handbediengerät erfolgen. Auch ein Einblenden mittels Augmented Reality direkt in die Szene ist denkbar.

Der den Roboter programmierenden Person wird es somit ermöglicht, den bzw. die freien Redundanzparameter verändern zu können, sodass beispielsweise die kartesischen Prozessvorgaben weiterhin erfüllt werden. Beispielsweise kann der Roboterarm um die Z-Achse gedreht werden, wenn beispielsweise symmetrische Werkzeuge verwendet werden, oder der Ellbogenkreis eines 7-Achs Roboters kann verändert werden. Währenddessen kann vorzugsweise der Person die jeweils aktuelle Bewertungsgüte dargestellt werden, sodass sie direkt eine Rückmeldung bekommt und so eine verbesserte, wenn nicht gar optimale Stellung bezüglich der angezeigten Bewertungskriterien auswählen kann.

Ein weiteres Beispiel für die Verwendung des erfindungsgemäßen Verfahrens ist ein mobiler Manipulator bzw. ein mobiler Roboter, der z.B. ein Objekt greifen soll. Hier kann die Person die gegebenenfalls vorhandene mobile Plattform, auf der der Roboterarm gegebenenfalls befestigt ist, beispielsweise an die Aufnahmestation fahren. Hierbei wählt sie beispielsweise erst mal eine ihres Erachtens geeigneten Position für die mobile Plattform aus. Anschließend kann sie den Roboterarm so zum Zielort (Greifposition) als solchen bewegen. Anschließend bekommt sie gegebenenfalls direkt eine visuelle Rückmeldung, welche die aktuelle Pose des Roboterarms bewertet. Nun kann sie die Position der mobilen Plattform verändern, während die Position bzw. Pose des Greifers unverändert bleibt. Aufgrund der Bewertungsgüte kann die Person somit eine bessere Position für die mobile Plattform finden und teachen.

Ein weiteres Bewertungskriterium kann sich aufgrund von gegebenenfalls verwendeten internen Achsmomentensensoren des Roboterarms ergeben. Je nach Achsstellung kann es sein, dass die berechneten kartesischen Kraft-/Momentenwerte unterschiedlich genau bzw. zuverlässig sind. Möchte die den Roboter programmierende Person beispielsweise Aufgaben programmieren, die die kartesische Kraft benötigen, so gibt es entsprechend günstige bzw. weniger günstige Achsstellungen. Entsprechende Bewertungsgüten für die "Kraftzuverlässigkeit" in x,y,z,a,b,c, Richtung kann der Person angezeigt werden.

Ein weiteres Beispiel für eine Bewertungsgüte wäre die Achsstellung, bei der die aufbringbare Kraft des Roboterarms in eine bestimmte Richtung maximal ist.

Neben diesen rein punktbezogenen Bewertungskriterien können die Kriterien auch bezüglich ganzer Bahnen erfolgen. Durch das Verändern der Achsstellung in einem Punkt ändern sich die Achsstellungen der gesamten Bewegung. Dies kann ebenfalls bewertet und angezeigt werden. Somit ergeben sich weitere Bewertungskriterien, wie z.B. Energieoptimalität, Taktzeit (max. Geschwindigkeit auf Bahn), Geschwindigkeitstreue, Bahntreue und/oder weitere Größen, die von den jeweiligen Achsstellungen und -verläufen abhängen.

Ausführungsbeispiele der Erfindung sind exemplarisch in den beigefügten schematischen Zeichnungen dargestellt. Es zeigen:
- Fig. 1: einen Roboter,
- Fig. 2: einen mobilen Roboter und
- Fig. 3: ein Handbediengerät zum manuellen Bewegen des Roboterarms des Roboters der Fig. 1.

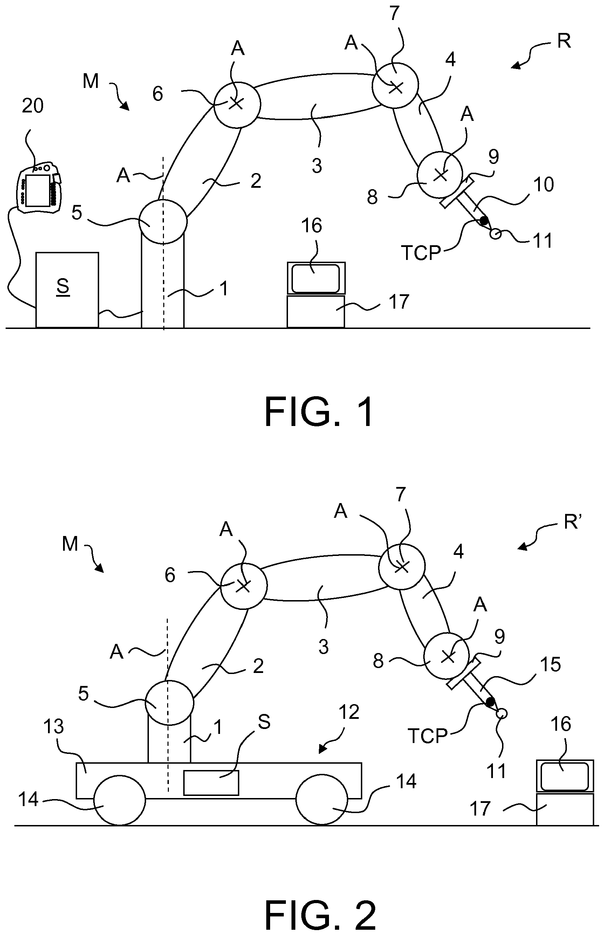

Die Fig. 1 zeigt einen Roboter R, der einen Roboterarm M und eine Steuervorrichtung S aufweist. Der Roboterarm M stellt im Wesentlichen den beweglichen Teil des Roboters R dar und umfasst mehrere, nacheinander folgende Glieder 1-4, die mittels Gelenke 5-8 miteinander verbunden sind. An einem seiner Enden weist der Roboterarm M eine Befestigungsvorrichtung 9 z.B. in Form eines Flansches auf, an dem z.B. ein Endeffektor befestigt werden kann.

Der Roboterarm M weist ferner mit der Steuervorrichtung S verbundene, nicht näher dargestellte Antriebe auf, mittels derer die Glieder 1-4 bezüglich Achsen A relativ zueinander bewegt werden können. Die Antriebe sind z.B. elektrische Antriebe und werden im Automatikbetrieb des Roboters R von der Steuervorrichtung S angesteuert, sodass die Befestigungsvorrichtung 9 oder ein sogenannter Tool Center Point TCP des Roboters R automatisch eine vorbestimmte Bewegung durchführt. Zu diesem Zweck läuft auf der Steuervorrichtung S ein entsprechendes Anwenderprogramm. Die Steuervorrichtung S kann insbesondere derart ausgeführt sein, dass sie im Automatikbetrieb die Antriebe regelt.

Im Falle des vorliegenden Ausführungsbeispiels weist der Roboterarm M sieben Achsen A auf, d.h. der Roboter R ist ein sogenannter 7-Achs-Roboter. Somit ergeben sich theoretisch für jede Pose, d.h. Position und Lage, der Befestigungsvorrichtung 9 bzw. des Tool Center Point TCP unendlich viele Achsstellungen des Roboterarms M.

Im Falle des vorliegenden Ausführungsbeispiels wird das Anwenderprogramm des Roboters R erstellt, indem eine nicht näher dargestellte Person den Roboterarm M manuell derart bewegt, sodass die Befestigungsvorrichtung 9 bzw. der Tool Center Point TCP eine vorbestimmte Pose einnimmt. Anschließend wird die dieser Pose entsprechende Achsstellung des Roboterarms M in der Steuervorrichtung S gespeichert. Dies wird gegebenenfalls für mehrere Punkte 11 wiederholt, wodurch der Roboter R bzw. dessen Steuervorrichtung S im Automatikbetrieb den Roboterarm M derart ansteuern kann, sodass die Befestigungsvorrichtung 9 bzw. der Tool Center Point TCP die gewünschte Bewegung ausführt. Um der Person die Bedienung des Roboters R zu erleichtern, kann an der Befestigungsvorrichtung 9 ein Teachwerkzeug 10 befestigt werden, um der Person z.B. einen Hinweis auf den Tool Center Point TCP zu geben.

Um den Roboterarm R manuell zu bewegen, kann der Roboter R bzw. dessen Roboterarm M z.B. durch manuelles Führen bewegt werden, d.h. die Person kann den Roboterarm M z.B. durch Ziehen oder Drücken beispielsweise an der Struktur des Roboterarms M oder durch Ziehen am Teachwerkzeug 10 derart manuell bewegen, sodass die Befestigungsvorrichtung 9 entsprechend der gewünschten Pose des Tool Center Points TCP ausgerichtet ist.

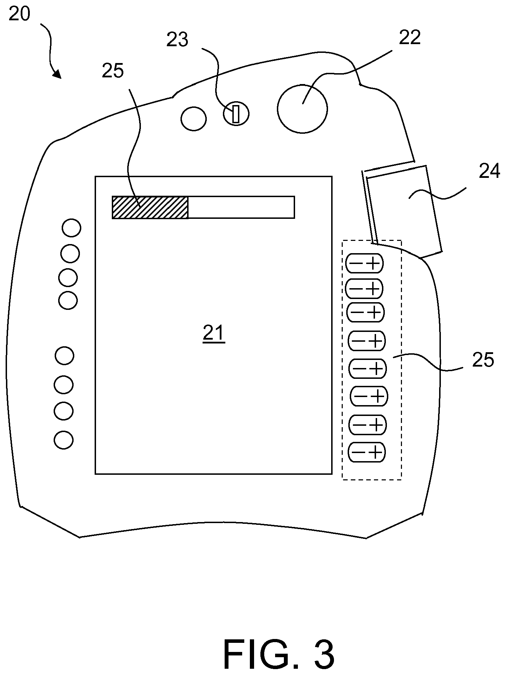

Alternativ oder zusätzlich kann es auch vorgesehen sein, dass der Roboter R mittels eines an die Steuervorrichtung 3 anschließbaren und in der Fig. 3 näher dargestellten Handbediengerätes 20 manuell bewegt und gegebenenfalls programmiert wird. Handbediengerät 20 umfasst z.B. eine Elektronik, die einen Mikroprozessor umfasst, um mit der Steuervorrichtung S kommunizieren zu können.

Im Falle des vorliegenden Ausführungsbeispiels umfasst das Handbediengerät 20 eine als Touch-Screen 21 ausgebildete Anzeige, eine Not-Aus Taste 22 und einen als Schloss ausgebildeten Umschalter 23. Mittels des Umschalters 23 bzw. eines nicht näher dargestellten Schlüssels kann mittels des Handbediengerätes 20 der Roboter R von seinem Automatik- in seinen Handbetrieb zum manuellen Bewegen umgeschaltet werden. Beim Aktivieren der Not-Aus Taste 22 stoppt der Roboter R seine Bewegung automatisch. Mittels des Touch-Screens 21 kann menügeführt das Handbediengerät 20 eingestellt werden.

Um den Roboterarm M manuell bewegen zu können, umfasst im Falle des vorliegenden Ausführungsbeispiels das Handbediengerät 20 zwei verschiedene und insbesondere voneinander unabhängig manuell betätigbare Eingabemittel bzw. Verfahrmittel 24, 25. Eine der beiden Verfahrmittel 24 ist z.B. als eine 6D-Maus und das andere Verfahrmittel 15 ist beispielsweise als mehrere Wipp-Tasten ausgeführt. Die 6D-Maus, die auch als Space-Maus bezeichnet wird, erlaubt, wenn aktiviert, eine Bewegung des Roboterarms R in sechs Freiheitsgraden. Die Wipp-Tasten sind z.B. den einzelnen Achsen A des Roboterarms M zugeordnet, sodass mittels der Wipp-Tasten ebenfalls der Roboterarm M manuell bewegt werden kann.

Um nun das Anwenderprogramm zu erstellen, wird der Roboterarm M z.B. mittels des Handbediengerätes 20 und/oder durch manuelles Führen derart manuell bewegt, dass der Tool Center Point TCP im Punkt 11 seine gewünschte Pose einnimmt. Da es sich bei dem Roboter R um einen 7-Achs Roboter handelt, ergeben sich theoretisch unendlich viele Achsstellungen des Roboterarms M für diese Pose.

Im Falle des vorliegenden Ausführungsbeispiels läuft auf der Steuervorrichtung S und/oder auf einem Rechner 17 ein Rechnerprogramm, welches die aktuelle Achsstellung des Roboterarms M für die gewünschte Pose gemäß wenigstens einem vorgegebenen oder vorgebbaren Kriterium bewertet. Aufgrund der Bewertung aufgrund des wenigstens einen Kriteriums kann der Person z.B. auf dem Touch-Screen 22 des Handbediengerätes 20 und/oder auf einer anderen Anzeigevorrichtung 16 eine Information über die bewertete Achsstellung des Roboterarms M angezeigt werden. Die Information über die Bewertung kann z.B. als ein Zahlenwert von z.B. 1 bis 6 oder als normierter Zahlenwert zwischen 0 und 1 oder mittels eines Balkens 25 angezeigt werden, dessen Länge ein Maß für die Bewertung der aktuellen Achsstellung des Roboterarms M ist. Die Bewertung aufgrund des Kriteriums kann insbesondere mittels eines Optimierungsverfahrens durchgeführt geführt werden, bei welchem insbesondere das wenigstens eine Kriterium der Parameter des Optimierungsverfahrens ist.

Im Falle des vorliegenden Ausführungsbeispiels kann die Bewertung der Achsstellung aufgrund wenigstens einer der folgenden Kriterien erfolgen:
- Abstände der Achsen A von den jeweiligen Endanschlägen der entsprechenden Glieder 1-4,
- Manipulierbarkeit des Roboterarms M,
- wirkende Drehmomente auf die einzelnen Glieder 1-4,
- Größe der Kraft, die der Roboterarm M aufbringen kann,
- Energieeffizienz.

Wird z.B. die aktuelle Achsstellung aufgrund der Abstände der Achsen A bewertet, dann wird die aktuelle Achsstellung umso besser bewertet, je weiter die Glieder 1-4 von ihren Endanschlägen entfernt sind. Dementsprechend ist der Balken 25 länger. Sind z.B. in der gewünschten Pose die der aktuellen Achsstellung zugeordneten Abstände maximal, dann weist der Balken 25 seine maximale Länge auf. Wird die Bewertung mittels Zahlen angezeigt, bedeutet z.B. "1" maximaler Abstand zu den Endanschlägen.

Die Manipulierbarkeit des Roboterarms M kann z.B. mittels der sogenannten, dem Fachmann allgemein bekannten Jaccobi-Matrix berechnet werden, welche der Achsstellung des Roboterarms M zugeordnet ist. Je größer die Manipulierbarkeit des Roboterarms M ist, desto besser ist die Bewertung der aktuellen Achsstellung.

Die Drehmomente können z.B. mittels Achsmomentensensoren des Roboterarms M bestimmt werden. Die Bewertung ist besser, je geringer die auf den Roboterarm M bzw. dessen Glieder 1-4 wirkenden Drehmomente sind.

Die Energieeffizienz ist z.B. den Antrieben zugeordnet, welche entsprechend der Achsstellung unterschiedlich viel Energie verbrauchen.

Aufgrund der Anzeige der Bewertung der aktuellen Achsstellung wird es der den Roboter R programmierenden Person erlaubt, für eine gewünschte Pose des Tool Center Points TCP unterschiedliche Achsstellung probehalber einzustellen und eine Bewertung der unterschiedlichen Achsstellungen zu erhalten, um selber entscheiden zu können, welche der Achsstellungen für die gewünschte Pose programmiert werden soll.

Die Fig. 2 zeigt einen weiteren Roboter R'. Wenn nicht anders beschrieben, dann sind Bestandteile des in der Fig. 2 gezeigten Roboters R', die mit Bestandteilen des in der Fig. 1 gezeigten Roboters R im Wesentlichen bau- und funktionsgleich sind, mit denselben Bezugszeichen versehen.

Der Roboter R' unterscheidet sich im Wesentlichen vom Roboter R dadurch, dass der in der Fig. 2 gezeigte Roboter R' als ein mobiler Roboter R' ausgeführt ist und eine mobile Plattform 12 mit einem Fahrzeugkörper 13 und mehreren, am Fahrzeugkörper 13 drehbar gelagerten Rädern 14 aufweist. Am Fahrzeugkörper 13 ist der Roboterarm M befestigt und am oder im Fahrzeugkörper 13 ist die Steuervorrichtung S angeordnet. Die Räder 14 sind z.B. omnidirektionale Räder und werden beispielsweise von nicht näher gezeigten Antrieben, insbesondere elektrischen Antrieben angetrieben, sodass der Roboterarm M mittels der mobilen Plattform 12 bewegt werden kann. Die Antriebe der Räder 14 sind insbesondere mit der Steuervorrichtung S verbunden, sodass der mobile Roboter R' automatisch mittels der mobilen Plattform 12 bewegt werden kann.

Der Roboter R' kann ebenfalls ein 7-Achs Roboter sein, kann aber auch weniger als 7 Achsen A aufweisen. Der mobile Roboter R' kann z.B. vorgesehen sein, ein Objekt mittels eines an der Befestigungsvorrichtung 9 befestigten Greifers 15 zu greifen. Um dies zu programmieren, kann es im Falle des vorliegenden Ausführungsbeispiels vorgesehen sein, dass die den Roboter R' programmierende Person diesen z.B. gesteuert durch das Handbediengerätes 20 manuell an eine Aufnahmestation an eine Position heranfährt, und dann den Roboterarm M des Roboters R' z.B. durch manuelles Führen und/oder durch manuelles Bewegen mittels des Handbediengerätes 20 derart manuell bewegt, dass die Befestigungsvorrichtung 9 bzw. der Tool Center Point TCP im Punkt 11 eine gewünschte Pose einnimmt.

Anschließend wird ähnlich wie obenstehend beschrieben die Achsstellung zur eingestellten Pose bewertet und die Bewertung visuell beispielsweise am Handbediengerät 20 und/oder an der Anzeigevorrichtung 16 angezeigt. Anschließend kann die den Roboter R' programmierende Person die Position der mobilen Plattform 12 verändern, während die Lage des Greifers 15 oder des Teachwerkzeugs 10 bzw. die Pose des Tool Center Points TCP unverändert bleibt. Dies wird erreicht, indem die Steuervorrichtung S die Antriebe des Roboterarms M geeignet ansteuert. Entsprechend der geänderten Position oder Lage der mobilen Plattform 12 wird die aktuelle Bewertung der Achsstellung errechnet und angezeigt. Aufgrund der angezeigten Bewertung wird es somit der Person ermöglicht, eine bessere, wenn nicht gar optimale Position oder Lage für die mobilen Plattform 12 des mobilen Roboters R' für die Programmierung zu ermitteln.

Es ist auch möglich, die Roboter R, R' mittels eines indirekten Verfahrens zu programmieren, indem die den Roboter R, R' programmierende Person für die gewünschte Pose unterschiedliche Achsstellungen des Roboterarms M und/oder verschieden Positionen oder Lagen der mobilen Plattform 12 simuliert, wobei die simulierten Achsstellungen entsprechend wie oben beschrieben bewertet und entsprechend der Bewertung ein Ergebnis des Bewertens auf einer Anzeigevorrichtung dargestellt werden. Die Simulation läuft z.B. auf dem Rechner 17.

Die Bewertung kann für einzelne Punkte 11 oder für mehrere Punkte 11 erfolgen. Es ist auch möglich, neben dieser rein punktbezogenen Bewertung auch eine Bewertung bezüglich ganzer Bahnen oder Teilbahnen zu erstellen. Durch das Verändern der Achsstellung in einem Punkt 11 ändern sich die Achsstellungen der gesamten Bewegung. Dies kann ebenfalls bewertet und angezeigt werden. Somit ergeben sich weitere Kriterien für die Bewertung, wie z.B. Energieoptimalität, Taktzeit (max. Geschwindigkeit auf Bahn), Geschwindigkeitstreue, Bahntreue und/oder weitere Größen, die von den jeweiligen Achsstellungen und -verläufen abhängen.

Es ist auch möglich, die Bewertung bzw. das oder die verwendeten Kriterien für die Bewertung der Achsstellung auszuwählen und zu kombinieren. Hierzu können beispielsweise der den Roboter R, R' programmierenden Person vordefinierte Kriterien zur Verfügung gestellt sein, die sie durch Konfiguration an- bzw. abwählen kann. Wird die Bewertung normiert angezeigt, d.h. z.B. zwischen "0" und "1", dann kann es vorgesehen sein, sollten mehrere Kriterien für die Bewertung verwendet werden, die den einzelnen gegebenenfalls ausgewählten Kriterien zugeordneten Bewertungen getrennt anzuzeigen oder die Bewertung als einen kombinierten Wert anzuzeigen. Mit Hilfe entsprechender Gewichtungsfaktoren können die Einzelkriterien unterschiedlich stark gewichtet werden.

Es ist aber auch möglich, dass die den Roboter R, R' programmierende Person eigene Kriterien oder Bewertungsfunktionen implementieren kann. Hierzu kann ihr ein Rahmen zur Verfügung gestellt werden, indem sie eine beliebige Bewertungsfunktion mit Hilfe einer geeigneten Beschreibungssprache formulieren und in das System integrieren kann.

## Patentansprüche

1. Verfahren zum Programmieren eines Roboters (R, R'), der einen mehrere, nacheinander folgende Glieder (1-4), eine Befestigungsvorrichtung (9) zum Befestigen eines Endeffektors und Antriebe zum Bewegen der Glieder (1-4) aufweisenden Roboterarm (M) und eine mit den Antrieben verbundene Steuervorrichtung (S) aufweist, aufweisend folgende Verfahrensschritte:
- manuelles Bewegen des Roboterarms (M), sodass die Befestigungsvorrichtung (9) und/oder ein dem Roboterarm (M) zugeordneter Tool Center Point (TCP) eine vorgegebene Pose einnimmt, wobei für diese Pose mehrere Stellungen von Achsen (A) des Roboterarms (M), bezüglich derer die Glieder (1-4) mittels der Antriebe bewegbar sind, möglich sind,
- automatisches Bewerten der aktuellen Stellung der Achsen (A) des Roboterarms (M) für die aktuelle Pose aufgrund wenigstens eines vorgegebenen und/oder vorgebbaren Kriteriums insbesondere mittels der Steuervorrichtung (S) und/oder einer Rechenvorrichtung (17),
- Anzeigen des Ergebnisses des Bewertens der aktuellen Stellung der Achsen (A) mittels einer Anzeigevorrichtung (16, 22),
- manuelles Verändern der Stellung der Achsen (A) bei gleichzeitigem Beibehalten der Pose der Befestigungsvorrichtung (9) und/oder des Tool Center Point (TCP),
- automatisches Bewerten der veränderten Stellung der Achsen (A) des Roboterarms (M) für die aktuelle Pose aufgrund des wenigstens einen Kriteriums insbesondere mittels der Steuervorrichtung (S) und/oder der Rechenvorrichtung (17), und
- Anzeigen des Ergebnisses des Bewertens der aktuellen veränderten Stellung der Achsen (A) mittels der Anzeigevorrichtung (16, 22), wobei das Kriterium wenigstens eines der folgenden ist:
- Abstände der Achsen (A) von den jeweiligen Endanschlägen der entsprechenden Glieder (1-4) des Roboterarms (M),
- wirkende Drehmomente auf die einzelnen Glieder (1-4) des Roboterarms (M),
- maximale Kraft, die der Roboterarm (M) in der aktuellen Stellung der Achsen (A) aufbringen kann, und/oder
- Energieeffizienz insbesondere der Antriebe in der aktuellen Stellung der Achsen (A).

2. Verfahren nach Anspruch 1, aufweisend manuelles Bewegen des Roboterarms (M) aufgrund eines manuellen Führens des Roboterarms (M).

3. Verfahren nach Anspruch 1, aufweisend manuelles Bewegen des Roboterarms (M) mittels eines mit der Steuervorrichtung (S) verbundenen Handbediengerätes (20).

4. Verfahren nach einem der Ansprüche 1 bis 3, aufweisend Anzeigen des Ergebnisses des Bewertens der aktuellen Stellung der Achsen (A) mittels eines grafischen Balkens (25) .

5. Verfahren nach einem der Ansprüche 1 bis 4, aufweisend:
- automatisches Bewerten der aktuellen Stellung der Achsen (A) des Roboterarms (M) für die aktuelle Pose aufgrund mehrerer vorgegebener und/oder vorgebbarer Kriterien insbesondere mittels der Steuervorrichtung (S) und/oder der Rechenvorrichtung (17), und
- Anzeigen des Ergebnisses des Bewertens der aktuellen Stellung der Achsen (A) mittels der Anzeigevorrichtung (16, 22) für jedes der Kriterien und/oder für die Gesamtheit aller Kriterien.

6. Verfahren nach einem der Ansprüche 1 bis 5, bei dem der Roboter (R') eine mobile Plattform (12) aufweist, an der der Roboterarm (M) befestigt ist, aufweisend Bewegen der mobilen Plattform (12) an eine Position bevor der Roboterarms (M) derart manuell bewegt wird, sodass die Befestigungsvorrichtung (9) und/oder der Tool Center Point (TCP) die vorgegebene Pose einnimmt.

7. Verfahren nach Anspruch 6, aufweisend
- Verändern der Position und/oder Lage der mobilen Plattform (12) bei gleichzeitigem Beibehalten der Pose der Befestigungsvorrichtung (9) und/oder des Tool Center Points (TCP),
- automatisches Bewerten der veränderten Stellung der Achsen (A) des Roboterarms (M) für die aktuelle Pose aufgrund des wenigstens einen Kriteriums insbesondere mittels der Steuervorrichtung (S) und/oder der Rechenvorrichtung (17), und
- Anzeigen des Ergebnisses des Bewertens der aktuellen Stellung der Achsen (A) mittels der Anzeigevorrichtung (16, 22).

8. Verfahren nach Anspruch 7, aufweisend folgende zusätzliche Verfahrensschritte:
- manuelles Verändern der Position oder Lage der manuellen Plattform (12) und, gesteuert durch die Steuervorrichtung (S), automatisches Bewegen des Roboterarms (M) derart, so dass die Pose der Befestigungsvorrichtung (9) und/oder des Tool Center Point (TCP) beibehalten bleibt,
- automatisches Bewerten der veränderten Stellung der Achsen (A) des Roboterarms (M) für die aktuelle Pose aufgrund des wenigstens einen Kriteriums insbesondere mittels der Steuervorrichtung (S) und/oder der Rechenvorrichtung (17), und
- Anzeigen des Ergebnisses des Bewertens der aktuellen veränderten Stellung der Achsen (A) mittels der Anzeigevorrichtung (16, 22).

9. Verfahren nach einem der Ansprüche 1 bis 8, bei dem anstelle des manuellen Bewegens des Roboterarms (M) die Stellung der Achsen (A) des Roboterarms (M) mittels einer Rechenvorrichtung (17) derart simuliert wird, sodass die Befestigungsvorrichtung (9) und/oder der Tool Center Point (TCP) eine simulierte vorgegebene Pose einnimmt, die simulierte aktuelle Stellung der Achsen (A) des Roboterarms (M) für die simulierte aktuelle Pose aufgrund des wenigstens einen Kriteriums bewertet wird, und das Ergebnis des Bewertens der simulierten aktuellen Stellung der Achsen (A) mittels einer Anzeigevorrichtung (16, 22) angezeigt wird.

## Claims

1. Method for programming a robot (R, R'), which comprises a robot arm (M) having a plurality of successive links (1-4), a fastening device (9) for securing an end effector and drives for moving the links (1-4) and a control device (S) connected to the drives, comprising the following method steps:
- manually moving the robot arm (M), so that the fastening device (9) and/or a tool centre point (TCP) assigned to the robot arm (M) adopts a predefined pose, wherein for said pose a plurality of positions of axes (A) of the robot arm (M) are possible, relative to which the links (1-4) can be moved by means of the drives,
- automatically evaluating the current position of the axes (A) of the robot arm (M) for the current pose on the basis of at least one predefined and/or predefinable criterion, in particular by means of the control device (S) and/or a computing device (17),
- displaying the result of the evaluation of the current position of the axes (A) by means of a display device (16, 22),
- manually changing the position of the axes (A) and at the same time maintaining the pose of the fastening device (9) and/or the tool centre point (TCP),
- automatically evaluating the changed position of the axes (A) of the robot arm (M) for the current pose on the basis of the at least one criterion, in particular by means of the control device (S) and/or the computing device (17), and
- displaying the result of the evaluation of the current changed position of the axes (A) by means of the display device (16, 22), wherein the criterion is at least one of the following:
- the distances of the axes (A) from the respective end stops of the corresponding links (1-4) of the robot arm (M),
- the torques acting on the individual links (1-4) of the robot arm (M),
- the maximum force that the robot arm (M) can apply in the current position of the axes (A) and/or
- the energy efficiency particularly of the drives in the current position of the axes (A).

2. Method according to claim 1, comprising the manual movement of the robot arm (M) by manually guiding the robot arm (M).

3. Method according to claim 1, comprising the manual movement of the robot arm (M) by means of a handheld device (20) connected to the control device (S).

4. Method according to any of claims 1 to 3, comprising displaying the result of the evaluation of the current position of the axes (A) by means of a graphic bar (25).

5. Method according to any of claims 1 to 4, comprising:
- automatically evaluating the current position of the axes (A) of the robot arm (M) for the current pose on the basis of a plurality of predefined and/or predefinable criteria, in particular by means of the control device (S) and/or the computing device (17), and
- displaying the result of the evaluation of the current position of the axes (A) by means of the display device (16, 22) for each of the criteria and/or for all of the criteria.

6. Method according to any of claims 1 to 5, in which the robot (R') comprises a mobile platform (12) on which the robot arm (M) is secured, comprising moving the mobile platform (12) to a position before the robot arm (M) is moved manually such that the fastening device (9) and/or the tool centre point (TCP) adopts the predefined pose.

7. Method according to claim 6, comprising
- changing the position and/or location of the mobile platform (12) at the same time as maintaining the pose of the fastening device (9) and/or the tool centre point (TCP),
- automatically evaluating the changed position of the axes (A) of the robot arm (M) for the current pose on the basis of the at least one criterion, in particular by means of the control device (S) and/or the computing device (17), and
- displaying the result of the evaluation of the current position of the axes (A) by means of the display device (16, 22).

8. Method according to claim 7, comprising the following additional method steps:
- manually changing the position or location of the mobile platform (12) and, controlled by the control device (S), automatically moving the robot arm (M) such that the pose of the fastening device (9) and/or the tool centre point (TCP) is retained,
- automatically evaluating the changed position of the axes (A) of the robot arm (M) for the current pose on the basis of the at least one criterion, in particular by means of the control device (S) and/or the computing device (17), and
- displaying the result of the evaluation of the current changed position of the axes (A) by means of the display device (16, 22).

9. Method according to any of claims 1 to 8, in which instead of manually moving the robot arm (M) the position of the axes (A) of the robot arm (M) is simulated by means of a computing device (17) such that the fastening device (9) and/or the tool centre point (TCP) adopts a simulated predefined pose, the simulated current position of the axes (A) of the robot arm (M) is evaluated for the simulated current pose on the basis of the at least one criterion, and the result of the evaluation of the simulated current position of the axes (A) is displayed by means of a display device (16, 22).

## Revendications

1. Procédé de programmation d'un robot (R, R') qui présente un bras de robot (M) comportant plusieurs membres (1-4) successifs, un dispositif de fixation (9) pour fixer un effecteur final et des entraînements pour mouvoir les membres (1-4), ainsi qu'un dispositif de commande (S) relié aux entraînements, et qui présente les étapes de procédé suivantes :
- le déplacement manuel du bras de robot (M) de telle sorte que le dispositif de fixation (9) et/ou un Tool Center Point (TCP) associé au bras de robot (M) prend une pose prédéterminée, plusieurs positions d'axes (A) du bras de robot (M) étant possibles pour cette pose, par rapport auxquels les membres (1-4) peuvent être déplacés au moyen des entraînements,
- l'évaluation automatique de la position actuelle des axes (A) du bras de robot (M) pour la pose actuelle sur la base d'au moins un critère prédéterminé et/ou susceptible d'être prédéterminé, en particulier au moyen du dispositif de commande (S) et/ou d'un dispositif de calcul (17),
- l'affichage du résultat de l'évaluation de la position actuelle des axes (A) au moyen d'un dispositif d'affichage (16, 22),
- la modification manuelle de la position des axes (A) tout en maintenant simultanément la pose du dispositif de fixation (9) et/ou du Tool Center Point (TCP),
- l'évaluation automatique de la position modifiée des axes (A) du bras de robot (M) pour la pose actuelle sur la base dudit au moins un critère, en particulier au moyen du dispositif de commande (A) et/ou du dispositif de calcul (17), et
- l'affichage du résultat de l'évaluation de la position actuelle modifiée des axes (A) au moyen d'un dispositif d'affichage (16, 22), dans lequel le critère est l'un des critères suivants :
- les distances des axes (A) par rapport aux butées finales respectives des membres (1-4) correspondants du bras de robot (M),
- les couples de rotation agissant sur chaque membre (1-4) du bras de robot (M),
- la force maximale que le bras de robot (M) peut appliquer dans la position actuelle des axes (A), et/ou
- l'efficacité énergétique, en particulier des entraînements dans la position actuelle des axes (A) au moyen d'une barre graphique.

2. Procédé selon la revendication 1, présentant le déplacement manuel du bras de robot (M) sur la base d'un guidage manuel du bras de robot (M).

3. Procédé selon la revendication 1, présentant le déplacement manuel du bras de robot (M) au moyen d'un appareil à commande manuelle (20) relié au dispositif de commande (S).

4. Procédé selon l'une des revendications 1 à 3, présentant l'affichage du résultat de l'évaluation de la position actuelle des axes (A)

5. Procédé selon l'une des revendications 1 à 4, présentant:
- l'évaluation automatique de la position actuelle des axes (A) du bras de robot (M) pour la pose actuelle sur la base de plusieurs critères prédéterminés et/ou susceptibles d'être prédéterminés, en particulier au moyen du dispositif de commande (S) et/ou d'un dispositif de calcul (17), et
- l'affichage du résultat de l'évaluation de la position actuelle des axes (A) au moyen d'un dispositif d'affichage (16, 22) pour chacun des critères et/ou pour la totalité de tous les critères.

6. Procédé selon l'une des revendications 1 à 5, dans lequel le robot (R') présente une plateforme (12) mobile sur laquelle est fixé le bras de robot (M), présentant le déplacement de la plateforme (12) mobile à une position avant que le bras de robot (M) soit déplacé manuellement de telle sorte que le dispositif de fixation (9) et/ou le Tool Center Point (TCP) prend la position prédéterminée.

7. Procédé selon la revendication 6, présentant
- la modification de la position et/ou de l'emplacement de la plateforme (12) mobile tout en maintenant en même temps la pose du dispositif de fixation (9) et/ou du Tool Center Point (TCP),
- l'évaluation automatique de la position modifiée des axes (A) du bras de robot (M) pour la pose actuelle sur la base dudit au moins un critère, en particulier au moyen du dispositif de commande (S) et/ou d'un dispositif de calcul (17), et
- l'affichage du résultat de l'évaluation de la position actuelle des axes (A) au moyen du dispositif d'affichage (16, 22).

8. Procédé selon la revendication 7, présentant les étapes de procédé additionnelles suivantes :
- la modification manuelle de la position et/ou de l'emplacement de la plateforme (12) mobile et, commandé par le dispositif de commande (S), le déplacement automatique du bras de robot (M) de telle sorte que la pose du dispositif de fixation (9) et/ou du Tool Center Point (TCP) est maintenue,
- l'évaluation automatique de la position modifiée des axes (A) du bras de robot (M) pour la pose actuelle sur la base dudit au moins un critère, en particulier au moyen du dispositif de commande (S) et/ou d'un dispositif de calcul (17), et
- l'affichage du résultat de l'évaluation de la position actuelle des axes (A) au moyen du dispositif d'affichage (16, 22).

9. Procédé selon l'une des revendications 1 à 8, dans lequel au lieu du déplacement manuel du bras de robot (M), la position des axes (A) du bras de robot (M) est simulée de telle sorte que le dispositif de fixation (9) et/ou le Tool Center Point (TCP) prend une pose prédéterminée simulée, la position actuelle simulée des axes (A) du bras de robot (M) pour la pose actuelle simulée sur la base dudit au moins un critère est évaluée, et le résultat de l'évaluation de la position actuelle simulée des axes (A) est affiché au moyen d'un dispositif d'affichage (16, 22).
